# EUROPEAN PATENT SPECIFICATION

(11) **EP 1 565 693 B1**
(45) Date of publication and mention of the grant of the patent: **01.02.2012**
(21) Application number: 03780624.7
(22) Date of filing: 06.11.2003
(51) Int. Cl.: F24H 1/00

(54) **BOILER**
KESSEL
CHAUDIERE

(30) Priority: 07.11.2002 IT MI20022365
(43) Date of publication of application: 24.08.2005
(73) Proprietor: Riello S.p.A., 37048 Legnago (IT)
(72) Inventor: BOTTARLINI, Giuseppe, I-22050 Garlate (IT)
(74) Representative: Jorio, Paolo
(86) International application number: PCT/IT2003/000722
(87) International publication number: WO 2004/042289

(56) References cited:
- EP-A- 1 130 319
- WO-A-89/02581
- AT-B- 399 219
- DE-U- 29 904 232
- US-A- 4 993 402
- US-A- 5 365 459
- US-A- 5 426 975
- US-A- 5 775 318
- US-A1- 2001 048 032

## Description

The present invention relates to a boiler, in particular a wall-mounted gas heating boiler having an aspirating burner, a primary heat exchanger, a secondary condensation heat exchanger, and a fan interposed between the two heat exchangers.

### BACKGROUND ART

In heating boilers, particularly wall-mounted gas types, so-called condensation boilers are known which comprise a combustion chamber associated with an air/gas premix burner, a fan for conducting the air-gas mixture to the burner, and a heat exchanger which, besides transferring heat from the fumes to a heating fluid (water), comprises a condensing section for recovering latent condensation heat from the fumes.

From European Patent Application EP-A-0945688, a boiler is also known comprising two separate heat exchangers arranged in series along the fume path: a primary heat exchanger for transferring heat from the fumes to the heating fluid, and a secondary heat exchanger in which the vapour in the fumes is condensed.

Also DE29904232-U discloses a boiler according to the preamble of claim 1 having a primary and a secondary heat exchangers; the secondary heat exchanger comprises a spiral pipe

while providing for a fairly high degree of efficiency, the above known boilers still leave room for further improvement in terms of both efficiency and, above all, design complexity. In fact, the heat exchangers currently used in the applications referred to are fairly complex and bulky, which therefore also applies to the relative boilers.

Moreover, the high level of efficiency of currently available condensation boilers is achieved using air/gas premix burners, as opposed to straightforward aspirating atmospheric burners which are simpler, cheaper, and quieter.

### DISCLOSURE OF INVENTION

It is an object of the present invention to provide a boiler, in particular a condensation boiler, which provides for a high level of efficiency, is compact, and at the same time cheap and easy to produce.

The present invention therefore relates to a boiler as defined in the accompanying Claim 1.

The specific design of the secondary heat exchanger, which has an extremely compact structure combined with a high degree of thermal efficiency, makes for an extremely compact boiler as a whole, while at the same time ensuring a high degree of overall efficiency. The overall efficiency of the boiler according to the invention, in fact, is not only far superior to that of conventional non-condensing boilers, but also, with the same combustion, i.e. burner feed, system, to that of known condensation boilers. More specifically, the boiler according to the invention provides for a high degree of efficiency even using an aspirating air/gas regulating atmospheric burner, and for substantially the same efficiency as known condensation boilers featuring more complex, high-cost premix burners with a high noise level.

In other words, using an aspirating atmospheric burner, the boiler according to the invention provides for efficiency comparable to that of condensation boilers featuring premix burners, while also maintaining low CO and Nox pollutant emission levels. Which results (high efficiency and low pollutant emissions) are obtained, unlike known condensation boilers, using an aspirating atmospheric burner as opposed to a premix burner.

Avoiding the use of premix burners, while still achieving high efficiency levels, also provides for reducing acoustic emissions (typically high in premix boilers), as well as the overall cost of the boiler.

Boilers featuring flow sensors combined with safety and/or regulating systems are known, for example, from Patent Application FRA-A-2687212, in which gas supply to the burner of the boiler is cut off when a flow sensor detects zero flow in the fume exhaust conduit. The sensor comprises a differential pressure switch connected to two pressure outlets located in the fume exhaust conduit, downstream from the fume circulating fan. Known systems of this type have the drawback of failing to ensure adequate stability of the pressure signals supplied to the pressure switch, particularly in the event of a malfunction, and mainly on account of the location of the pressure outlets.

Nor is the problem solved entirely satisfactorily by the solution illustrated in Patent Application EP-A-1130319, in which the pressure outlets are located generically, as opposed to in precise positions, inside the fan casing, so that the signals picked up are strongly affected by recirculating currents, turbulence, etc.

Conversely, by selecting specific pressure outlet locations, in accordance with the invention, operation of the sensor is unaffected by internal turbulence or recirculating currents which may lead to erroneous signals, and a high degree of stability of the pressure signals supplied to the sensor is achieved, so that operation of the sensor is more precise and reliable. Moreover, location of the pressure outlets in accordance with the invention greatly reduces load losses in the flow generated by the fan, on which the pressure outlets have a negligible effect.

### BRIEF DESCRIPTION OF THE DRAWINGS

An embodiment of the present invention will be described by way of example with reference to the accompanying drawings, in which:
Figures 1 and 2 show, respectively, a simplified schematic view and an overall view in perspective, with parts removed for clarity, of a boiler in accordance with the invention;
Figure 3 shows an exploded view of a condensation heat exchanger used in the Figure 1 and 2 boiler;
Figures 4 and 5 show, respectively, an overall view and an exploded view of a first detail of the Figure 3 heat exchanger;
Figures 6 and 7 show, respectively, an overall view and an exploded view of a second detail of the Figure 3 heat exchanger;
Figure 8 shows a partly exploded view in perspective of a fan forming part of the Figure 1 and 2 boiler;
Figures 9 and 10 show, respectively, a front view and side view of the Figure 8 fan;
Figure 11 shows a section along line XI-XI in Figure 10;
Figure 12 shows a section of a venturi tube forming part of the Figure 8 fan.

### BEST MODE FOR CARRYING OUT THE INVENTION

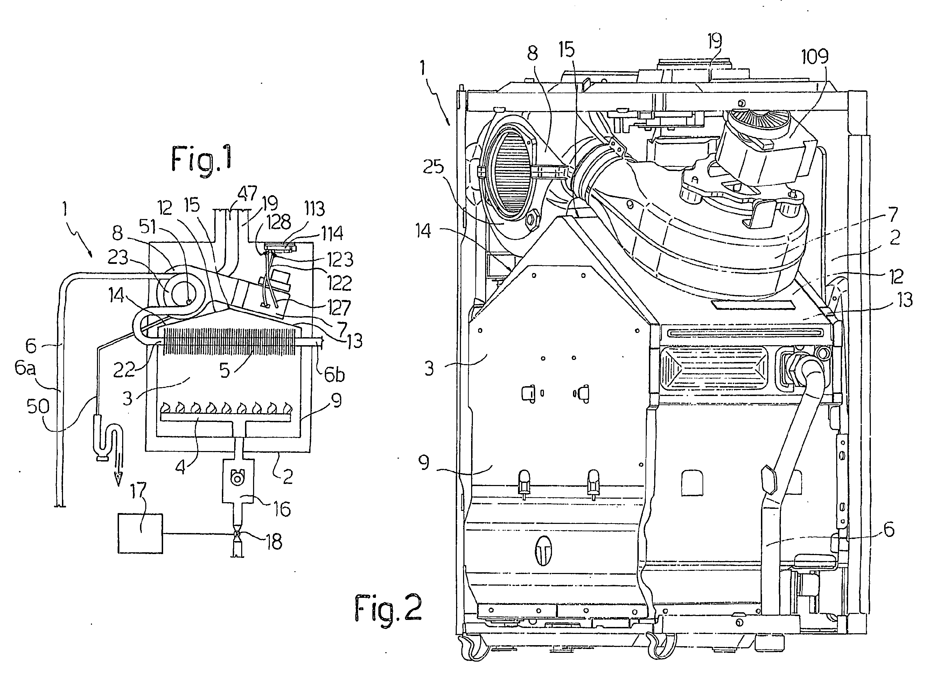

With reference to Figures 1 and 2, a boiler 1, in particular a wall-mounted condensation heating boiler, comprises an airtight casing 2, in which are housed a combustion chamber 3 associated with a gas burner 4; a primary heat exchanger 5 for transferring heat from the fumes in combustion chamber 3 to a heating fluid circulating in a known circuit 6 (shown only partly in Figure 1 for the sake of simplicity); a fume circulating fan 7; and a secondary condensation heat exchanger 8 for recovering latent condensation heat from the fumes. Primary heat exchanger 5, fan 7, and secondary heat exchanger 8 are arranged in series with combustion chamber 3 along a fume path.

Combustion chamber 3 is defined by a housing 9 closed airtight with respect to casing 2, and housing burner 4 and primary heat exchanger 5. Housing 9 comprises a substantially rectangular-based prismatic body having a gable-roof-shaped top wall 12 with two sloping (or generically oppositely inclined) sides 13, 14 joined by a ridge 15.

Fan 7 and secondary heat exchanger 8 are located side by side on top of combustion chamber 3, and more specifically on respective sides 13 and 14; and fan 7 is located along the fume path between primary heat exchanger 5 and secondary heat exchanger 8.

Burner 4 is a known aspirating atmospheric type connected by a feed conduit 16 to a gas mains; a known control unit 17 controls a known valve 18 inserted along feed conduit 16 to regulate the air/gas ratio supplied to burner 4; and combustion air is drawn from outside casing 2 along an intake conduit 19.

Primary heat exchanger 5 is housed inside housing 9 defining combustion chamber 3, and comprises a conduit 22 connected to circuit 6 and along which the heating fluid circulates. Conduit 22 is finned externally, and is flowed over by the fumes produced in combustion chamber 3 and circulated by fan 7.

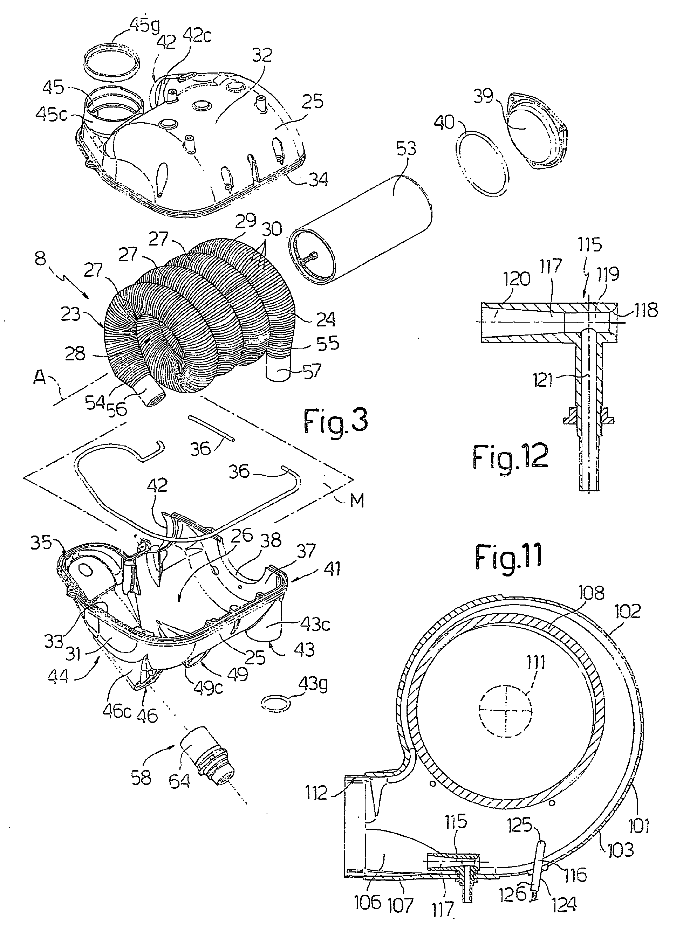

With reference also to Figure 3, secondary heat exchanger 8 comprises a substantially round-section pipe 23 wound to form a spiral conduit 24 extending along an axis A and in which the heating fluid circulates; and an enclosure 25 having a substantially cylindrical inner chamber 26 in which pipe 23 is housed, and in which the fumes flow over the outside of pipe 23.

Pipe 23, which is preferably made of aluminium, has a number of adjacent turns 27 contacting one another along axis A and defining a substantially cylindrical, radially inner gap 28. Pipe 23 has external finning 29 comprising a number of substantially annular fins 30 projecting radially from an outer lateral surface of pipe 23 and substantially crosswise to pipe 23.

Enclosure 25 is substantially cylindrical, extends along axis A, and comprises two convex shells 31, 32, e.g. defined by respective one-piece pressure cast aluminium bodies, joined in fluidtight manner to define chamber 26.

More specifically, shells 31, 32 are joined, e.g. by screws (not shown), along respective edges 33, 34 lying in a mid-plane M of enclosure 25 and having grooves 35 for the insertion of seals 36.

An end wall 37 of enclosure 25 has an access opening 38 closed by a removable cover 39 having a sealing ring 40 and fixed to enclosure 25, for example, by screws (not shown).

A longitudinal end 41 of enclosure 25 comprises two openings 42, 43 defining a fume inlet and a heating fluid outlet respectively; a longitudinal end 44 of enclosure 25, opposite end 41, comprises two openings 45, 46 defining a fume outlet and a heating fluid inlet; openings 42, 46 (defining the fume and heating fluid inlets) are located substantially diametrically opposite each other, and substantially extend from opposite sides of enclosure 25; and openings 43, 45 (defining the heating fluid and fume outlets) are located diametrically opposite each other, and extend from opposite sides, substantially perpendicular to plan M.

Openings 42, 43, 45, 46 are formed through enclosure 25, and are defined by respective collars 42c, 43c, 45c, 46c extending substantially radially outside enclosure 25. More specifically, openings 43, 46 are formed in shell 31, opening 45 is formed in shell 32, and opening 42 is defined by two facing portions formed in shells 31, 32. Opening 45 (fume outlet) has a seal 45g housed inside collar 45c, and is connected to an exhaust conduit 47.

Shell 31, positioned beneath shell 32 and facing side 14 of housing 9, has a further opening 49 defined by a radially outer collar 49c connected, with the interposition of a seal 49g, to a drain pipe 50 (Figure 1) for draining off the condensate formed inside enclosure 25. Enclosure 25 houses a known level sensor 51 which, in the event of condensate drainage failure (so that condensate accumulates above a given level inside enclosure 25), opens a known electric safety circuit (not shown) to cut off gas supply to burner 4.

A substantially cylindrical deflecting member 53, closed at the ends, is housed inside the gap 28 defined by turns 27, to cause the fumes inside chamber 26 to flow over finning 29. Fins 30 are positioned substantially contacting an inner lateral surface of chamber 26 and an outer lateral surface of deflecting member 53; and deflecting member 53 is inserted and removed through access opening 38, after first removing cover 39.

Pipe 23 terminates, at respective opposite ends 54, 55, with two end portions 56, 57 having no fins and inserted respectively inside openings 46 and 43.

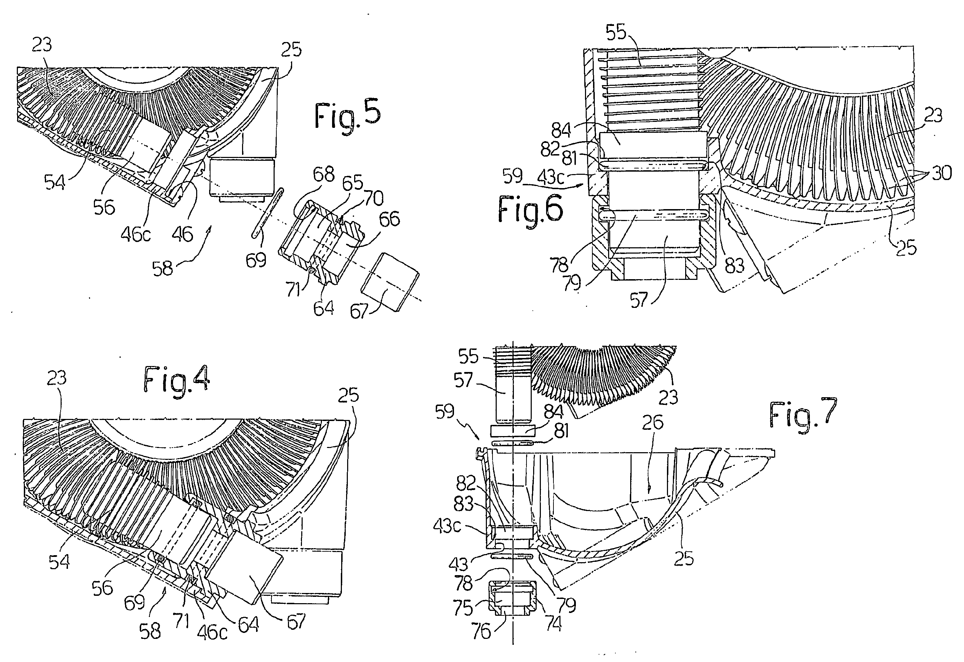

As shown in detail in Figures 4 to 7, secondary heat exchanger 8 comprises two connecting assemblies 58, 59 located at ends 54, 55 of pipe 23 and comprising respective first and second sealing means for connecting ends 54, 55 of pipe 23 in fluidtight manner to heating fluid circuit 6 and enclosure 25 respectively. More specifically, connecting assembly 58 at opening 46 (defining the heating fluid inlet) comprises a tubular fitting 64 made, for example, of aluminium, and having, at respective axially opposite ends, two inner seats 65, 66 in which to respectively insert end portion 56 of pipe 23 and a sleeve 67 for connection to circuit 6.

Seat 65 has a circumferential groove 68 housing a radially inner sealing ring 69, which cooperates radially on the inside with end portion 56 force-fitted inside seat 65. Fitting 64 also comprises, on its outer lateral surface, a groove 70 housing a radially outer sealing ring 71, which cooperates radially on the outside and in fluidtight manner with an inner lateral surface of collar 46c defining opening 46. Fitting 64 is fixed to enclosure 25, and more specifically to collar 46c, in any known manner.

Similarly, connecting assembly 59 at opening 43 (defining the heating fluid outlet) comprises a tubular fitting 74 made, for example, of zinc-plated steel, and having, at respective axially opposite ends, two inner seats 75, 76 in which to respectively insert end portion 57 of pipe 23, and a sleeve (not shown) for connection to circuit 6.

Seat 75 has a circumferential groove 78 housing a radially inner sealing ring 79, which cooperates radially on the inside with end portion 57 force-fitted inside seat 75.

Connecting assembly 59 comprises a sealing ring 81 fitted to end portion 57 and housed inside a seat 82 formed inside collar 43c and having an annular shoulder 83. End portion 57 is fitted through collar 43c and force-fitted inside seat 75; and sealing ring 81 is gripped axially against shoulder 83 by a lock ring 84, in turn fitted and locked onto the outside of end portion 57.

The connecting assemblies ensure that neither the fumes nor the heating fluid, and not even the acid condensate from the fumes, escape from the enclosure. The specific design and structure of the connecting assemblies also safeguard against electrolytic corrosion phenomena, with no need to weld the end portions of the pipe.

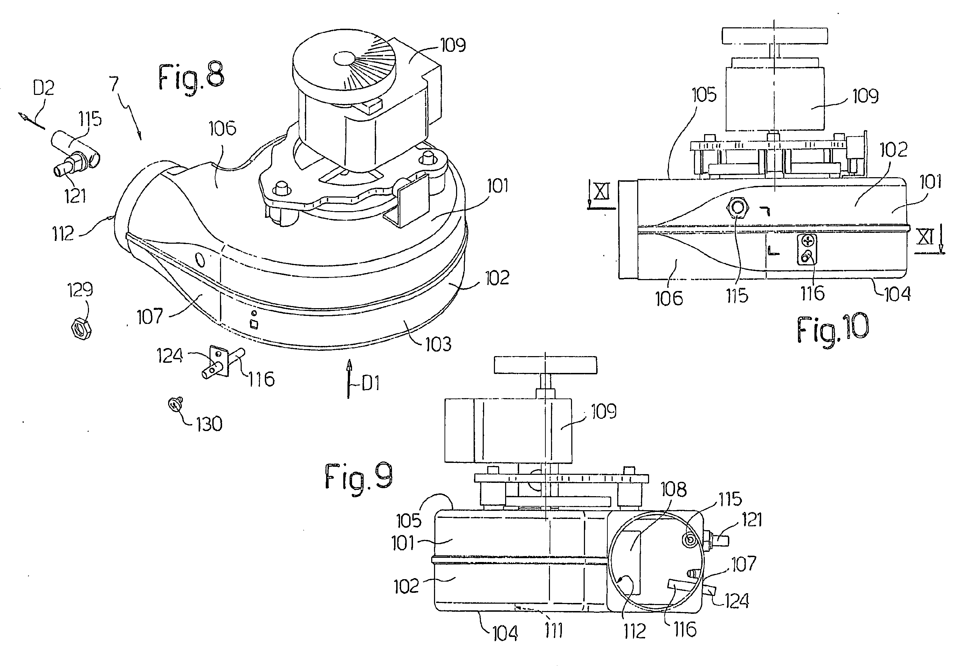

With reference also to Figures 8 to 12, fan 7 comprises a volute 101 defined by a metal casing 102 having a curved lateral wall 103 between a substantially flat bottom wall 104 (facing side 13 of combustion chamber 3) and a substantially flat top wall 105 parallel to each other; and a substantially straight delivery portion 106 positioned tangentially with respect to volute 101, and having a substantially straight, radially outer side 107 connected continuously to lateral wall 103 of volute 101.

Volute 101 houses a known impeller 108, not shown in detail for the sake of simplicity, driven by a known electric motor 109 fitted to top wall 105, outside volute 101.

Fan 7 is a centrifugal type having a substantially axial suction direction D1, and a delivery direction D2 substantially tangential with respect to impeller 108. Volute 101 has a suction hole 111 formed through the centre of bottom wall 104 and connected to combustion chamber 3 through an opening in side 13; and a delivery hole 112 located at the end of delivery portion 106 and connected to secondary heat exchanger 8.

Fan 7 is associated with a flow (or pressure) sensor 113 connected to control unit 17 to regulate gas supply to burner 4 as a function of the values detected by sensor 113. More specifically, sensor 113 comprises a differential pressure switch 114; and pressure outlets 115, 116 located inside volute 101, downstream from impeller 108. Pressure switch 114 is known, e.g. of the type comprising two chambers separated by an elastically deformable membrane and connected to respective pressure outlets.

Pressure outlets 115, 116 are dynamic and static respectively.

Dynamic pressure outlet 115 comprises a venturi tube 117 extending tangentially inside volute 101, in a substantially laminar region of the flow generated by impeller 108 inside volute 101. In other words, venturi tube 117 extends along an axis substantially parallel to the flow direction.

More specifically, venturi tube 117 is housed inside delivery portion 106, with its axis substantially parallel to delivery portion 106, and is adjacent and substantially parallel to substantially straight side 107 of delivery portion 106.

Venturi tube 117 has an inwardly tapering inlet 118; a substantially constant-section neck 119; and a flared portion 120. A tube 121 is connected to neck 119, is fitted through side 107, and is connected by a conduit 122 to a first input 123 of pressure switch 114.

Static pressure outlet 116 is located in a turbulent region of the flow generated by impeller 108 in volute 101, upstream from dynamic pressure outlet 115, and comprises a tubular, e.g. straight, substantially cylindrical, probe 124 fitted through lateral wall 103 of volute 101. Probe 124 extends inside volute 101 substantially crosswise to the flow direction, and terminates inside volute 101 with an open end 125 substantially parallel to the flow direction of the stream flowing over it, and located close to the centre of the flow section at that point. The end 126 of probe 124 opposite end 125 and located outside volute 101 is connected by a conduit 127 to a second input 128 of pressure switch 114.

Tube 121 and probe 124 are fixed to side 107 and lateral wall 103 respectively in known manner, e.g. by threaded fastening members 129, 130.

Boiler 1 operates in substantially the same way as known condensation boilers.

The gas from the mains and the air intake along intake conduit 19 are burned inside combustion chamber 3 in the ratio determined by control unit 17 and also on the basis of the values detected by sensor 113; and the combustion fumes flow over conduit 22 of primary heat exchanger 5 to transfer heat to the heating fluid.

The fumes and combustion air are circulated by fan 7, which maintains combustion chamber 3 at lower than external atmospheric pressure.

The fumes are then fed to secondary heat exchanger 8, where they transfer heat to the heating fluid, and acid condensate is formed and drained off along drain pipe 50. In the event of drainage failure, the condensate not drained off remains inside enclosure 25 and does not come into contact with any other component part of boiler 1. The fumes are then exhausted along exhaust conduit 47.

The heating fluid from an input branch 6a of circuit 6 is heated in secondary heat exchange 8 before being fed to primary heat exchanger 5, from which it flows into an output branch 6b of circuit 6.

Operation of boiler 1 is regulated on the basis of flow values detected by sensor 113, which operates in known manner. Briefly, the pressure signals picked up by means of pressure outlets 115, 116 inside volute 101 of fan 7 generate a differential pressure signal p which is converted by pressure switch 114 into a direct voltage. A microprocessor in control unit 17 assigns each p value a given gas supply quantity to burner 4, thus achieving constant efficiency values over the whole power range of boiler 1.

In the event of a malfunction, or even flow being cut off inside volute 101 (e.g. due to clogging of exhaust conduit 47), pressure switch 114 detects a zero flow value and turns boiler 1 on. The specific locations of pressure outlets 115, 116 inside volute 101 provide for a high degree of stability of the pressure signals supplied to pressure switch 114.

Obviously, what is stated above applies equally to both heating-only boilers, i.e. simply producing hot water for a heating system (possibly combined with an external boiler), and combination boilers, i.e. producing heat for a heating system as well as hot water for domestic use.

## Claims

1. A boiler (1) comprising a combustion chamber (3) associated with a burner (4); a primary heat exchanger (5) for transferring heat from the fumes produced in the combustion chamber (3) to a heating fluid; a fan (7) for circulating said fumes; and a secondary condensation heat exchanger (8) for recovering latent condensation heat from said fumes; said secondary heat exchanger (8) comprising a pipe (23) wound to form a spiral conduit (24) extending along an axis (A) and in which said heating fluid circulates; and an enclosure (25) having a substantially cylindrical chamber (26) housing the pipe (23) and in which said fumes flow over the outside of said pipe (23); said pipe (23) having external finning (29) and a gap (28) defined by the turns (27) of the pipe (23) and housing a deflecting member (53) by which the fumes flowing inside said chamber (26) are directed over the finning (29) of the pipe (23);
the boiler being **characterized in that** the fan (7) and the secondary heat exchanger (8) are located side by side on top of the combustion chamber (3).

2. A boiler as claimed in Claim 1, **characterized in that** said finning (29) comprises a number of substantially annular fins (30) projecting radially from an outer lateral surface of the pipe (23) and substantially crosswise to the pipe (23).

3. A boiler as claimed in Claim 2, **characterized in that** said fins (30) substantially contact an inner lateral surface of said chamber (26) and an outer lateral surface of said deflecting member (53).

4. A boiler as claimed in one of the foregoing Claims, **characterized in that** said fan (7) is located along a path of said fumes between the primary heat exchanger (5) and the secondary heat exchanger (8).

5. A boiler as claimed in one of the foregoing claims, **characterized in that** the combustion chamber (3) has a gable-roof-shaped top wall (12) having two sloping sides (23,14); the fan (7) and the secondary heat exchanger (8) being located on top of respective sides (13,14).

6. A boiler as claimed in one of the foregoing Claims, **characterized in that** said enclosure (25) is defined by two shells (31,32) joined in fluidtight manner to define said chamber (26).

7. A boiler as claimed in one of the foregoing Claims, **characterized by** comprising two connecting assemblies (58,59) located at respective ends (54,55) of said pipe (23) and comprising respective first (69, 79) and second (71,81) sealing means for connecting said ends (54,55) in fluidtight manner to a heating fluid circuit (6) and the enclosure (25) respectively.

8. A boiler as claimed in Claim 7, **characterized in that** each of said connecting assemblies (58,59) comprises a fitting (64,74) connected to a respective end (54,55) of the pipe (23); a first seal (69,79) cooperating radially on the outside and in fluidtight manner with a respective portion of the enclosure (25); and a second seal (71,81) cooperating radially on the inside and in fluidtight manner with a respective end portion (56,57) of the pipe (23).

9. A boiler as claimed in one of the foregoing Claims, **characterized in that** the fan (7) comprises a volute (101) housing an impeller (108); and a flow or pressure sensor (113), which comprises pressure outlets (115,116) located inside the volute (101), downstream from the impeller (108), and is connected to a control unit (17) for controlling the burner (4) ; a first pressure outlet (115) being located in a substantially laminar region of the flow generated by the impeller (108) inside the volute (101).

10. A boiler as claimed in Claim 9, **characterized in that** said first pressure outlet (115) comprises a venturi tube (117) extending along an axis substantially parallel to the direction of said flow.

11. A boiler as claimed in Claim 10, **characterized in that** said venturi tube (117) extends tangentially inside the volute (101).

12. A boiler as claimed in Claim 10 or 11, **characterized in that** said venturi tube (117) is located close to a lateral wall (103) of the volute (101).

13. A boiler as claimed in one of claims 10 to 12, **characterized by** comprising a substantially straight delivery portion (106) located tangentially with respect to the volute (101); said venturi tube (117) being housed inside said delivery portion (106) and extending along an axis substantially parallel to said delivery portion (106).

14. A boiler as claimed in Claim 13, **characterized in that** said venturi tube (117) is housed inside said delivery portion (106) adjacent and substantially parallel to a side (107) of said delivery portion (106).

15. A boiler as claimed in one of Claims 10 to 14, **characterized in that** a second pressure outlet (116) is located in a turbulent region of said flow.

16. A boiler as claimed in Claim 15, **characterized in that** said second pressure outlet (116) comprises a tubular probe (124) fitted through a lateral wall (103) of the volute (101) and extending inside the volute (101) in a direction substantially crosswise to said flow.

## Patentansprüche

1. Kessel (1) mit einer Verbrennungskammer (3), die einem Brenner (4) zugeordnet ist; einem primären Wärmetauscher (5) zum Transferieren von Wärme von dem in der Verbrennungskammer (3) erzeugten Rauch zu einem Wärmefluid; einem Gebläse (7) zum Umwälzen des Rauches; und einem sekundären Kondensationswärmetauscher (8) zum Wiedergewinnen latenter Kondensationswärme von dem Rauch; wobei der sekundäre Wärmetauscher (8) umfasst: einen Schlauch (23), der gewickelt ist, um eine spiralartige Leitung (24) zu bilden, die sich entlang einer Achse (A) erstreckt und in der das Wärmefluid umgewälzt wird; und ein Gehäuse (25), das eine im Wesentlichen zylindrische Kammer (26) aufweist, die den Schlauch (23) unterbringt und in der Rauch über die Außenseite des Schlauchs (23) strömt; wobei der Schlauch (23) externe Lamellen (29) und einen Zwischenraum (28) aufweist, der durch die Windungen (27) des Schlauchs (23) definiert ist, und ein Ablenkelement (53) unterbringt, durch das der Rauch innerhalb der Kammer (26) strömt und über die Lamellen (29) des Schlauchs (23) geleitet wird; wobei der Kessel **dadurch gekennzeichnet ist, dass** das Gebläse (7) und der sekundäre Wärmetauscher (8) nebeneinander oben auf der Verbrennungskammer (3) angeordnet sind.

2. Kessel gemäß Anspruch 1, **dadurch gekennzeichnet, dass** die Lamellen (29) eine Anzahl von im Wesentlichen ringförmigen Rippen (30) umfassen, die radial von einer äußeren seitlichen Oberfläche des Schlauchs (23) und im Wesentlichen quergerichtet zu dem Schlauch (23) hervorragen.

3. Kessel gemäß Anspruch 2, **dadurch gekennzeichnet, dass** die Rippen (30) im Wesentlichen eine innere seitliche Oberfläche der Kammer (26) und einer äußere seitliche Oberfläche des Ablenkelements (53) kontaktieren.

4. Kessel gemäß einem der vorhergehenden Ansprüche, **dadurch gekennzeichnet, dass** das Gebläse (7) entlang eines Weges des Rauches zwischen dem primären Wärmetauscher (5) und dem sekundären Wärmetauscher (8) angeordnet ist.

5. Kessel gemäß einem der vorhergehenden Ansprüche, **dadurch gekennzeichnet, dass** die Verbrennungskammer (3) eine giebeldachförmige obere Wand (12) mit zwei geneigten Seiten (13, 14) aufweist; wobei das Gebläse (7) und der sekundäre Wärmetauscher (8) oben auf jeweiligen Seiten (13, 14) angeordnet sind.

6. Kessel gemäß einem der vorhergehenden Ansprüche, **dadurch gekennzeichnet, dass** das Gehäuse (25) durch zwei Schalen (31, 32) definiert ist, die auf eine fluiddichte Art und Weise verbunden sind, um die Kammer (26) zu definieren.

7. Kessel gemäß einem der vorhergehenden Ansprüche, **gekennzeichnet durch** Umfassen von zwei Verbindungsanordnungen (58, 59), die an jeweiligen Enden (54, 55) des Schlauchs (23) angeordnet sind und jeweilige erste (69, 79) und zweite (71, 81) Dichtungsmittel zum Verbinden der Enden (54, 55) auf eine fluiddichte Art und Weise mit einem Wärmefluidkreislauf (6) bzw. dem Gehäuse (25) umfassen.

8. Kessel gemäß Anspruch 7, **dadurch gekennzeichnet, dass** jede der Verbindungsanordnungen (58,59) umfasst: ein Anschlussteil (64,74), das mit einem jeweiligen Ende (54,55) des Schlauchs (23) verbunden ist; eine erste Dichtung (69,79), die radial auf der Außenseite und auf eine fluiddichte Art und Weise mit einem jeweiligen Abschnitt des Gehäuses (25) zusammenarbeitet; und eine zweite Dichtung (71,81), die radial auf der Innenseite und auf eine fluiddichte Art und Weise mit einem jeweiligen Endabschnitt (56,57) des Schlauchs (23) zusammenarbeitet.

9. Kessel gemäß einem der vorhergehenden Ansprüche, **dadurch gekennzeichnet, dass** das Gebläse (7) umfasst: ein Spiralgehäuse (101), das ein Laufrad (108) unterbringt; und einen Strömungs- oder Drucksensor (113), der Druckauslässe (115,116) umfasst, die innerhalb des Spiralgehäuses (101), stromabwärts von dem Laufrad (108) angeordnet sind, und mit einer Steuereinheit (17) zum Steuern des Brenners (4) verbunden ist; wobei ein erster Druckauslass (115) in einer im Wesentlichen laminaren Region der durch das Laufrad (108) erzeugten Strömung innerhalb des Spiralgehäuses (101) angeordnet ist.

10. Kessel gemäß Anspruch 9, **dadurch gekennzeichnet, dass** der erste Druckauslass (115) ein Venturi-Rohr (117) umfasst, das sich entlang einer Achse im Wesentlichen parallel zu der Richtung der Strömung erstreckt.

11. Kessel gemäß Anspruch 10, **dadurch gekennzeichnet, dass** sich das Venturi-Rohr (117) tangential innerhalb des Spiralgehäuses (101) erstreckt.

12. Kessel gemäß Anspruch 10 oder 11, **dadurch gekennzeichnet, dass** das Venturi-Rohr (117) nahe einer seitlichen Wand (103) des Spiralgehäuses (101) angeordnet ist.

13. Kessel gemäß einem der Ansprüche 10 bis 12, **gekennzeichnet durch** Umfassen eines im Wesentlichen geraden Abgabeabschnitts (106), der tangential mit Bezug auf das Spiralgehäuse (101) angeordnet ist; wobei das Venturi-Rohr (117) innerhalb des Abgabeabschnitts (106) untergebracht ist und sich entlang einer Achse im Wesentlichen parallel zu dem Abgabeabschnitt (106) erstreckt.

14. Kessel gemäß Anspruch 13, **dadurch gekennzeichnet, dass** das Venturi-Rohr (117) innerhalb des Abgabeabschnitts (106) benachbart und im Wesentlichen parallel zu einer Seite (107) des Abgabeabschnitts (106) untergebracht ist.

15. Kessel gemäß einem der Ansprüche 10 bis 14, **dadurch gekennzeichnet, dass** ein zweiter Druckauslass (116) in einer turbulenten Region der Strömung angeordnet ist.

16. Kessel gemäß Anspruch 15, **dadurch gekennzeichnet, dass** der zweite Druckauslass (116) eine rohrförmige Sonde (124) umfasst, die durch eine seitliche Wand (103) des Spiralgehäuses (101) angebracht ist und sich innerhalb des Spiralgehäuses (101) in einer Richtung im Wesentlichen quer zu der Strömung erstreckt.

## Revendications

1. Chaudière (1) comprenant une chambre de combustion (3) associée à un brûleur (4) ; un premier échangeur de chaleur (5) pour transférer de la chaleur provenant des fumées produites dans la chambre de combustion (3) à un fluide de chauffage ; un ventilateur (7) pour faire circuler lesdites fumées ; et un deuxième échangeur de chaleur de condensation (8) pour récupérer de la chaleur de condensation latente provenant desdites fumées ; ledit second échangeur de chaleur (8) comprenant un tuyau (23) enroulé pour former un conduit en spirale (24) s'étendant le long d'un axe (A) et dans lequel ledit fluide de chauffage circule ; et une enceinte (25) ayant une chambre sensiblement cylindrique (26) hébergeant le tuyau (23) et dans laquelle lesdites fumées s'écoulent sur l'extérieur dudit tuyau (23) ; ledit tuyau (23) ayant un ailettage externe (29) et un espace (28) défini par les spires (27) du tuyau (23) et hébergeant un élément déflecteur (53) grâce auquel les fumées circulant à l'intérieur de ladite chambre (25) sont envoyées sur l'ailettage (29) du tuyau (23) ;
la chaudière **se caractérisant en ce que** le ventilateur (7) et le second échangeur de chaleur (8) se situent côte à côte sur le haut de la chambre de combustion (3).

2. Chaudière telle que définie par la revendication 1, **caractérisée en ce que** ledit ailettage (29) comprend un certain nombre d'ailettes sensiblement annulaires (30) se projetant radialement à partir d'une surface latérale extérieure du tuyau (23) et sensiblement transversalement au tuyau (23).

3. Chaudière telle que revendiquée par la revendication 2, **caractérisée en ce que** lesdites ailettes (30) entrent sensiblement en contact avec une surface latérale intérieure de ladite chambre (26) et une surface latérale extérieure dudit élément déflecteur (53).

4. Chaudière telle que revendiquée par l'une des revendications précédentes, **caractérisée en ce que** ledit ventilateur (7) se situe le long d'un trajet desdites fumées entre le premier échangeur de chaleur (5) et le second échangeur de chaleur (8).

5. Chaudière telle que revendiquée par l'une des revendications précédentes, **caractérisée en ce que** la chambre de combustion (3) présente une paroi du haut en forme de toit à deux pentes (12) ayant deux côtés inclinés (13, 14) ; le ventilateur (7) et le second échangeur de chaleur (8) se situant sur le haut de côtés respectifs (13, 14).

6. Chaudière telle que revendiquée par l'une des revendications précédentes, **caractérisée en ce que** ladite enceinte (25) est définie par deux coques (31, 32) assemblées de manière étanche aux fluides afin de définir ladite chambre (26).

7. Chaudière telle que définie par l'une des revendications précédentes, **caractérisée en ce qu'**elle comprend deux assemblages de connexion (58, 59) situés aux extrémités respectives (54, 55) dudit tuyau (23) et **en ce qu'**elle comprend un premier (69, 79) et un second (71, 81) moyens de scellement respectifs pour connecter lesdites extrémités (54, 55) de manière étanche aux fluides respectivement à un circuit de fluide de chauffage (6) et à l'enceinte (25).

8. Chaudière telle que revendiquée par la revendication 7, **caractérisée en ce que** chacun desdits assemblages de connexion (58, 59) comprend un raccord (64, 74) connecté à une extrémité respective (54, 55) du tuyau (23) ; un premier joint d'étanchéité (69, 79) coopérant radialement à l'extérieur et de manière étanche aux fluides avec une partie respective de l'enceinte (25) ; et un second joint d'étanchéité (71, 81) coopérant radialement à l'intérieur et de manière étanche aux fluides avec une partie d'extrémité (56, 57) respective du tuyau (23).

9. Chaudière telle que revendiquée par l'une des revendications précédentes, **caractérisée en ce que** le ventilateur (7) comprend une volute (101) hébergeant une turbine (108) ; et un capteur de flux ou de pression (113), lequel comprend des sorties sous pression (115, 116) situées à l'intérieur de la volute (101), en aval de la turbine (108), et qui est connecté à une unité de commande (17) pour commander le brûleur (4) ; une première sortie sous pression (115) se situant dans une zone sensiblement laminaire du flux généré par la turbine (108) à l'intérieur de la volute (101).

10. Chaudière telle que revendiquée par la revendication 9, **caractérisée en ce que** ladite première sortie sous pression (115) comprend un tube de Venturi (117) s'étendant le long d'un axe sensiblement parallèle à la direction dudit flux.

11. Chaudière telle que revendiquée par la revendication 10, **caractérisée en ce que** ledit tube de Venturi (117) s'étend tangentiellement à l'intérieur de la volute (101).

12. Chaudière telle que revendiquée par la revendication 10 ou 11, **caractérisée en ce que** ledit tube de Venturi (117) se situe près d'une paroi latérale (103) de la volute (101).

13. Chaudière telle que revendiquée par l'une des revendications 10 à 12, **caractérisée en ce qu'**elle comprend une partie de délivrance sensiblement rectiligne (106) située tangentiellement par rapport à la volute (101) ; ledit tube de Venturi (117) étant logé à l'intérieur de ladite partie de délivrance (106) et s'étendant le long d'un axe sensiblement parallèle à ladite partie de délivrance (106).

14. Chaudière telle que revendiquée par la revendication 13, **caractérisée en ce que** ledit tube de Venturi (117) est logé à l'intérieur de ladite partie de délivrance (106) de manière adjacente et sensiblement parallèle à un côté (107) de ladite partie de délivrance (106).

15. Chaudière telle que revendiquée par l'une des revendications 10 à 14, **caractérisée en ce qu'**une seconde sortie sous pression (116) est située dans une zone turbulente dudit flux.

16. Chaudière telle que revendiquée par la revendication 15, **caractérisée en ce que** ladite deuxième sortie sous pression (116) comprend une sonde tubulaire (124) ajustée à travers une paroi latérale (103) de la volute (101) et s'étendant à l'intérieur de la volute (101) dans une direction sensiblement transversale audit flux.
